# EUROPEAN PATENT APPLICATION

(11) **EP 4 628 379 A1**
(43) Date of publication of application: **08.10.2025**
(21) Application number: 23896594.1
(22) Date of filing: 21.11.2023
(51) Int. Cl.: B60W 30/09, B60W 30/095, B60T 7/12

(54) **METHOD AND APPARATUS FOR TRIGGERING INSTRUCTION, AND INTELLIGENT DRIVING DEVICE**

(30) Priority: 30.11.2022 CN 202211516182
(71) Applicant: Shenzhen Yinwang Intelligent Technologies Co., Ltd., Shenzhen, Guangdong 518129 (CN)
(72) Inventor: CHEN, Linfeng, Shenzhen, Guangdong 518129 (CN); HU, Jun, Shenzhen, Guangdong 518129 (CN); WANG, Qijun, Shenzhen, Guangdong 518129 (CN); WANG, Jie, Shenzhen, Guangdong 518129 (CN)
(74) Representative: Körber, Martin Hans
(86) International application number: PCT/CN2023/132927
(87) International publication number: WO 2024/114442

(57) **Abstract**

Embodiments of this application provide an instruction triggering method and apparatus, and an intelligent driving device. The method includes: obtaining a first object, where information between the first object and the intelligent driving device meets a preset condition; predicting a first predicted trajectory obtained after the intelligent driving device triggers a first instruction, where the first instruction includes a steering instruction, an autonomous braking instruction, or a warning instruction; and determining, based on the first predicted trajectory and a second predicted trajectory of the first object, whether to trigger the first instruction. Embodiments of this application may be applied to an intelligent vehicle or an electric vehicle, to help improve safety and comfort of the intelligent driving device.

## Description

This application claims priority to Chinese Patent Application No. 202211516182.9, filed with the China National Intellectual Property Administration on November 30, 2022 and entitled "INSTRUCTION TRIGGERING METHOD AND APPARATUS, AND INTELLIGENT DRIVING DEVICE", which is incorporated herein by reference in its entirety.

### TECHNICAL FIELD

Embodiments of this application relate to the intelligent driving field, and more specifically, to an instruction triggering method and apparatus, and an intelligent driving device.

### BACKGROUND

In recent years, a market for functions of an advanced driving assistant system (advanced driving assistant system, ADAS) grows rapidly, and the functions are applied to an increasing quantity of vehicle systems. Some functions of the ADAS are intended to take active judgment and preventive safety measures (for example, functions such as autonomous emergency braking (autonomous emergency braking, AEB) and lane departure warning (lane departure warning, LDW)) before a subjective reaction of a driver in an emergency, to greatly reduce road traffic accidents and related casualties. These functions are significant in active safety for driving. In addition, the ADAS system further includes other assisted driving functions (for example, functions such as adaptive cruise control (adaptive cruise control, ACC), lane centering control (lane centering control, LCC), and active lane change). These functions help reduce driving fatigue, improve comfort of driving experience, and ensure safety in a driving process.

Currently, a working mode of the function of the ADAS is simple. When a dangerous situation occurs in actual driving, a condition for triggering the function is not necessarily met, which affects safety of an intelligent driving device. Alternatively, a warning is given too early before a vehicle is in danger, which affects comfort of an intelligent driving device.

### SUMMARY

Embodiments of this application provide an instruction triggering method and apparatus, and an intelligent driving device, to help improve safety and comfort of the intelligent driving device.

The intelligent driving device in this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (such as a commercial vehicle, a passenger vehicle, a motorcycle, a flight vehicle, or a train), an industrial vehicle (such as a forklift, a trailer, or a tractor), an engineering vehicle (such as an excavator, a bulldozer, or a crane), an agricultural device (such as a lawn mower or a harvester), a recreation device, a toy vehicle, or the like. A type of the vehicle is not specifically limited in embodiments of this application. For another example, the intelligent driving device may be a transportation means such as an aircraft or a ship.

According to a first aspect, this application provides an instruction triggering method. The method includes: obtaining a first object, where information between the first object and an intelligent driving device meets a preset condition; predicting a first predicted trajectory obtained after the intelligent driving device triggers a first instruction, where the first instruction includes a steering instruction, an autonomous braking instruction, or a warning instruction; and determining, based on the first predicted trajectory and a second predicted trajectory of the first object, whether to trigger the first instruction.

In this embodiment of this application, through prediction on the first predicted trajectory obtained after the intelligent driving device triggers the first instruction, whether to trigger the first instruction may be determined based on the first predicted trajectory and the second predicted trajectory. In this way, when it is determined, based on the first predicted trajectory and the second predicted trajectory, that there is a risk of collision between the intelligent driving device and the first object, the first instruction is triggered in time. This helps reduce a false negative rate of the first instruction, thereby helping avoid a safety accident between the intelligent driving device and the first object, and improving safety of the intelligent driving device. Alternatively, when it is determined, based on the first predicted trajectory and the second predicted trajectory, that there is no risk of collision between the intelligent driving device and the first object, the first instruction is not triggered. This helps reduce a false triggering rate of the first instruction, improves comfort of the intelligent driving device, and helps improve driving and ride experience of a user.

In some possible implementations, the second predicted trajectory includes one or more trajectories. The determining, based on the first predicted trajectory and a second predicted trajectory of the first object, whether to trigger the first instruction includes: determining, based on the first predicted trajectory and each trajectory of the one or more trajectories, whether to trigger the first instruction.

In some possible implementations, the determining, based on the first predicted trajectory and a second predicted trajectory of the first object, whether to trigger the first instruction includes: at a moment, when a distance between a first trajectory point in the first predicted trajectory and a second trajectory point in the second predicted trajectory is less than or equal to a preset distance, determining to trigger the first instruction; or at a moment, when a collision polygon of the intelligent driving device at the first trajectory point partially or completely overlaps a collision polygon of the first object at the second trajectory point, determining to trigger the first instruction.

In some possible implementations, the predicting a first predicted trajectory obtained after the intelligent driving device triggers a first instruction includes: in response to obtaining the first object, predicting the first predicted trajectory. In this way, when obtaining the first object, the intelligent driving device may predict a trajectory obtained after the first instruction is triggered, thereby helping reduce computing overheads of the intelligent driving device, and helping reduce power consumption of the intelligent driving device.

With reference to the first aspect, in some implementations of the first aspect, the predicting a first predicted trajectory obtained after the intelligent driving device triggers a first instruction includes: predicting the first predicted trajectory based on at least one of the following: braking acceleration information of the intelligent driving device, steering information of the intelligent driving device, the collision polygon of the intelligent driving device, a reaction time of the user to the first instruction, a response time of the intelligent driving device to the first instruction, and a traveling parameter of the intelligent driving device.

In this embodiment of this application, the first predicted trajectory of the intelligent driving device in a future period of time may be predicted with reference to at least one of the following: the braking acceleration information of the intelligent driving device, the steering information of the intelligent driving device, the collision polygon of the intelligent driving device, the reaction time of the user to the first instruction, the response time of the intelligent driving device to the first instruction, and the traveling parameter of the intelligent driving device, thereby helping improve accuracy of predicting the trajectory of the intelligent driving device.

In some possible implementations, when the first instruction is the steering instruction or the autonomous braking instruction, the first predicted trajectory may be predicted based on at least one of the following: the braking acceleration information of the intelligent driving device, the steering information of the intelligent driving device, the collision polygon of the intelligent driving device, the response time of the intelligent driving device to the first instruction, and the traveling parameter of the intelligent driving device.

In some possible implementations, when the first instruction is the warning instruction, the first predicted trajectory may be predicted based on at least one of the following: the braking acceleration information of the intelligent driving device, the steering information of the intelligent driving device, the collision polygon of the intelligent driving device, the reaction time of the user to the first instruction, and the traveling parameter of the intelligent driving device.

In some possible implementations, the braking acceleration information of the intelligent driving device includes a maximum braking acceleration, a jerk (jerk), and the like of the intelligent driving device.

In some possible implementations, the steering information of the intelligent driving device includes centripetal acceleration information of the intelligent driving device, chassis suspension information, and the like. For example, the intelligent driving device is a vehicle. The centripetal acceleration information of the intelligent driving device may include a maximum centripetal acceleration of safe steering of the vehicle in each working condition.

With reference to the first aspect, in some implementations of the first aspect, the obtaining a first object includes: obtaining the first object at a first moment, where the intelligent driving device is at a first location at the first moment, and a distance between a start location of the first predicted trajectory and the first location is a preset safety distance.

In this embodiment of this application, the preset safety distance may be reserved between the first location and the start location of the first predicted trajectory. In this way, a travel distance of the intelligent driving device in discrete time can be compensated, and impact caused by a response error, a sensing error, or a calibration error of the intelligent driving device can be reduced, thereby helping improve the safety of the intelligent driving device.

In some possible implementations, the method further includes: determining the preset safety distance based on at least one of the following: a type of the first instruction, the traveling parameter of the intelligent driving device, and a calculated frame rate of the intelligent driving device.

With reference to the first aspect, in some implementations of the first aspect, the obtaining a first object includes: obtaining a predicted trajectory of the intelligent driving device and a predicted trajectory of each object of a plurality of objects, where the plurality of objects include the first object; determining a time to collision (time to collision, TTC) between the intelligent driving device and each object based on the predicted trajectory of the intelligent driving device and the predicted trajectory of each object; and determining the first object from the plurality of objects based on the TTC between the intelligent driving device and each object.

In this embodiment of this application, the TTC between the intelligent driving device and each object of the plurality of objects may be determined with reference to the predicted trajectory of the intelligent driving device and the predicted trajectory of each object of the plurality of objects, and the first object is finally determined from the plurality of objects. In this way, an object that has a greatest or most urgent safety risk with the intelligent driving device can be accurately selected from the plurality of objects, and a risk can be accurately identified when running efficiency is considered, thereby helping improve calculation accuracy of a latest steering occasion, a latest braking occasion, or a latest warning occasion.

In some possible implementations, a TTC between the first object and the intelligent driving device is greater than a TTC between a second object and the intelligent driving device, and the second object is any one of the plurality of objects other than the first object.

In some possible implementations, the plurality of objects are objects in an alarm range of the intelligent driving device.

With reference to the first aspect, in some implementations of the first aspect, the method further includes: determining collision polygons of the intelligent driving device and each object based on the type of the first instruction and/or a type of each object. The determining a TTC between the intelligent driving device and each object based on the predicted trajectory of the intelligent driving device and the predicted trajectory of each object includes: determining the TTC between the intelligent driving device and each object based on the predicted trajectory of the intelligent driving device, the predicted trajectory of each object, and the collision polygons of the intelligent driving device and each object.

In this embodiment of this application, collision polygons of the intelligent driving device and the first object may be determined by using the type of the first instruction and/or a type of the first object. In this way, accuracy and flexibility of selecting the collision polygons of the intelligent driving device and the first object are improved, so that selection of the collision polygons of the intelligent driving device and the first object better conforms to an actual scenario requirement.

The TTC between the intelligent driving device and each object may be determined with reference to the predicted trajectory of the intelligent driving device, the predicted trajectory of each object, and the collision polygons of the intelligent driving device and each object. This helps improve accuracy of the TTC between the intelligent driving device and each object, thereby helping improve the safety and the comfort of the intelligent driving device.

With reference to the first aspect, in some implementations of the first aspect, the determining, based on the first predicted trajectory and a second predicted trajectory of the first object, whether to trigger the first instruction includes: determining, based on the first predicted trajectory, the second predicted trajectory of the first object, and an intention of a driver, whether to trigger the first instruction.

In this embodiment of this application, whether to trigger the first instruction may be further determined with reference to the driving intention of the driver. For example, when it is detected that a rotation angle change rate of a steering wheel is greater than a preset threshold, it may be determined that the driver is aware of a dangerous scenario and reacts to the dangerous scenario, so that the first instruction may not be triggered. This helps reduce the false triggering rate of the first instruction, improves the comfort of the intelligent driving device, and helps improve the driving and ride experience of the user.

With reference to the first aspect, in some implementations of the first aspect, the intention of the driver includes at least one of the following: an intention of the driver to rotate the steering wheel, an intention of the driver to step on a brake pedal, and an intention of the driver to step on an acceleration pedal.

With reference to the first aspect, in some implementations of the first aspect, the steering instruction includes an evasive steering assist (evasive steering assist, ESA) instruction; and/or the autonomous braking instruction includes an autonomous emergency braking AEB instruction or a cross traffic braking (cross traffic braking, CTB) instruction; and/or the warning instruction includes a forward collision warning (forward collision warning, FCW) instruction or a cross traffic alert (cross traffic alert, CTA) instruction.

According to a second aspect, this application provides an instruction triggering apparatus. The apparatus includes: an obtaining unit, configured to obtain a first object, where information between the first object and an intelligent driving device meets a preset condition; a prediction unit, configured to predict a first predicted trajectory obtained after the intelligent driving device triggers a first instruction, where the first instruction includes a steering instruction, an autonomous braking instruction, or a warning instruction; and a determining unit, configured to determine, based on the first predicted trajectory and a second predicted trajectory of the first object, whether to trigger the first instruction.

With reference to the second aspect, in some implementations of the second aspect, the prediction unit is configured to: predict the first predicted trajectory based on at least one of the following: braking acceleration information of the intelligent driving device, steering information of the intelligent driving device, a collision polygon of the intelligent driving device, a reaction time of a user to the first instruction, a response time of the intelligent driving device to the first instruction, and a traveling parameter of the intelligent driving device.

With reference to the second aspect, in some implementations of the second aspect, the obtaining unit is configured to: obtain the first object at a first moment, where the intelligent driving device is at a first location at the first moment, and a distance between a start location of the first predicted trajectory and the first location is a preset safety distance.

With reference to the second aspect, in some implementations of the second aspect, the obtaining unit is further configured to: obtain a predicted trajectory of the intelligent driving device and a predicted trajectory of each object of a plurality of objects, where the plurality of objects include the first object. The determining unit is further configured to: determine a TTC between the intelligent driving device and each object based on the predicted trajectory of the intelligent driving device and the predicted trajectory of each object; and determine the first object from the plurality of objects based on the TTC between the intelligent driving device and each object.

With reference to the second aspect, in some implementations of the second aspect, the determining unit is configured to: determine collision polygons of the intelligent driving device and each object based on a type of the first instruction and/or a type of each object; and determine the TTC between the intelligent driving device and each object based on the predicted trajectory of the intelligent driving device, the predicted trajectory of each object, and the collision polygons of the intelligent driving device and each object.

With reference to the second aspect, in some implementations of the second aspect, the determining unit is configured to: determine, based on the first predicted trajectory, the second predicted trajectory of the first object, and an intention of a driver, whether to trigger the first instruction.

With reference to the second aspect, in some implementations of the second aspect, the intention of the driver includes at least one of the following: an intention of the driver to rotate a steering wheel, an intention of the driver to step on a brake pedal, and an intention of the driver to step on an acceleration pedal.

With reference to the second aspect, in some implementations of the second aspect, the steering instruction includes an ESA instruction; and/or the autonomous braking instruction includes an AEB instruction or a CTB instruction; and/or the warning instruction includes an FCW instruction or a CTA instruction.

According to a third aspect, this application provides an instruction triggering apparatus. The apparatus includes a processing unit and a storage unit. The storage unit is configured to store instructions. The processing unit executes the instructions stored in the storage unit, so that the apparatus performs any one of the possible methods in the first aspect.

According to a fourth aspect, this application provides an intelligent driving device. The intelligent driving device includes any possible apparatus in the second aspect, or includes the apparatus in the third aspect.

With reference to the fourth aspect, in some implementations of the fourth aspect, the intelligent driving device is a vehicle.

According to a fifth aspect, this application provides a server. The server includes any one of the possible apparatuses in the second aspect or the third aspect.

With reference to the fifth aspect, in some implementations of the fifth aspect, the server further includes a communication unit, and the communication unit is configured to receive data sent by an intelligent driving device.

With reference to the fifth aspect, in some implementations of the fifth aspect, the communication unit is further configured to send indication information to the intelligent driving device. The indication information is used to indicate whether to trigger a first instruction.

According to a sixth aspect, this application provides a computer program product. The computer program product includes computer program code. When the computer program code is run on a computer, the computer is enabled to perform any one of the possible methods in the first aspect.

It should be noted that all or some of the computer program code may be stored in a first storage medium. The first storage medium may be encapsulated together with a processor, or may be encapsulated separately from a processor. This is not specifically limited in this embodiment of this application.

According to a seventh aspect, this application provides a computer-readable medium. The computer-readable medium stores program code. When the computer program code is run on a computer, the computer is enabled to perform any one of the possible methods in the first aspect.

According to an eighth aspect, this application provides a chip. The chip includes a circuit. The circuit is configured to perform any one of the possible methods in the first aspect.

### BRIEF DESCRIPTION OF DRAWINGS

FIG. 1 is a functional block diagram of an intelligent driving device according to an embodiment of this application;
FIG. 2 is a schematic flowchart of an instruction triggering method according to an embodiment of this application;
FIG. 3 is a diagram of an application scenario according to an embodiment of this application;
FIG. 4 is a diagram of a braking trajectory of a vehicle 1 according to an embodiment of this application;
FIG. 5 is a diagram of a system according to an embodiment of this application; and
FIG. 6 is a block diagram of an instruction triggering apparatus according to an embodiment of this application.

### DESCRIPTION OF EMBODIMENTS

In the descriptions of embodiments of this application, unless otherwise specified, "/" indicates "or". For example, A/B may indicate A or B. In this specification, "and/or" merely describes an association relationship between associated objects and indicates that three relationships may exist. For example, A and/or B may indicate the following three cases: Only A exists, both A and B exist, and only B exists.

Prefix words "first", "second", and the like in embodiments of this application are merely used to distinguish between different described objects, and do not limit a location, a sequence, a priority, a quantity, content, or the like of the described object. In embodiments of this application, use of a prefix word such as an ordinal number for distinguishing between the described objects does not constitute a limitation on the described objects. For descriptions of the described objects, refer to the descriptions in the context in the claims or embodiments. Use of such a prefix word should not constitute a redundant limitation. In addition, in the descriptions of embodiments, unless otherwise specified, "a plurality of" means two or more.

As described above, currently, a working mode of a function of an ADAS is simple. When a dangerous situation occurs in actual driving, a condition for triggering the function is not necessarily met, which affects safety of driving. Alternatively, a warning is given too early before a vehicle is in danger, which affects comfort of driving.

Embodiments of this application provide an instruction triggering method and apparatus, and an intelligent driving device. By using a predicted trajectory obtained after the intelligent driving device triggers a first instruction and a second predicted trajectory of an object, a latest steering actuality, a latest braking actuality, or latest warning occasion of the intelligent driving device can be determined, thereby helping improve safety and comfort of the intelligent driving device.

The following describes technical solutions in embodiments of this application with reference to accompanying drawings in embodiments of this application.

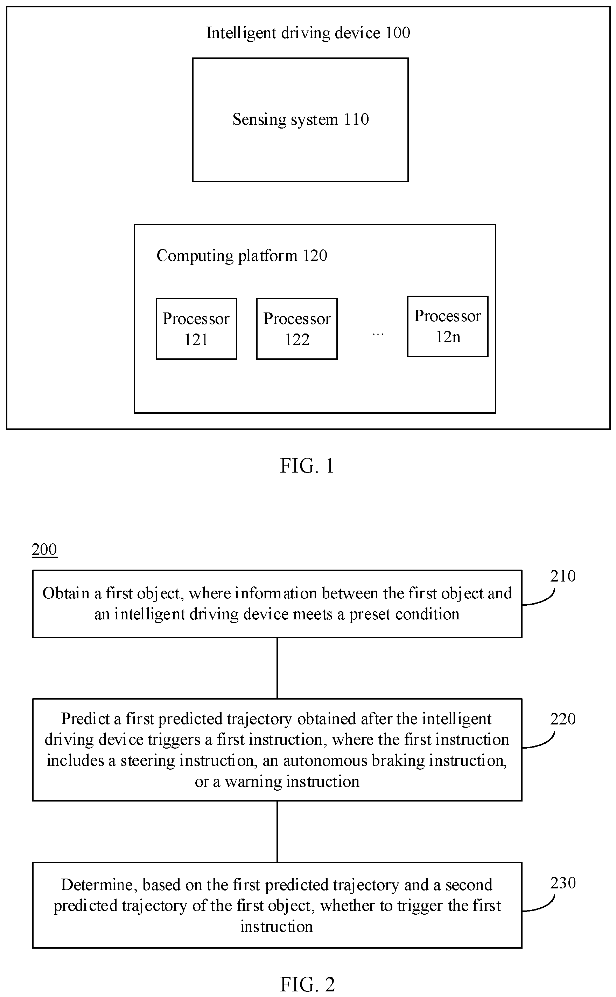

FIG. 1 is a functional block diagram of an intelligent driving device 100 according to an embodiment of this application. The intelligent driving device 100 may include a sensing system 110 and a computing platform 120. The sensing system 110 may include one or more sensors that sense information about a surrounding environment of the intelligent driving device 100. For example, the sensing system 110 may include a positioning system, and the positioning system may be a global positioning system (global positioning system, GPS), a BeiDou system, or another positioning system. The sensing system 110 may further include one or more of the following: an inertial measurement unit (inertial measurement unit, IMU), a lidar, a millimeter-wave radar, an ultrasonic radar, and a camera apparatus.

Some or all functions of the intelligent driving device 100 may be controlled by the computing platform 120. The computing platform 120 may include one or more processors, for example, processors 121 to 12n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 120 may further include a memory. The memory is configured to store instructions. Some or all of the processors 121 to 12n may invoke the instruction in the memory, to implement a corresponding function.

FIG. 2 is a schematic flowchart of an instruction triggering method 200 according to an embodiment of this application. As shown in FIG. 2, the method 200 may be performed by the intelligent driving device 100, or the method 200 may be performed by the computing platform 120, or the method 200 may be performed by a system-on-a-chip (system-on-a-chip, SoC) in the computing platform 120, or the method 200 may be performed by the processor in the computing platform 120. As shown in FIG. 2, the method 200 includes the following steps.

S210: Obtain a first object, where information between the first object and an intelligent driving device meets a preset condition.

In an embodiment, the preset condition includes that a distance between the first object and the intelligent driving device is less than or equal to a preset distance, and/or a TTC between the first object and the intelligent driving device is less than or equal to first preset duration.

For example, the preset distance is 10 meters (meters, m).

For example, the preset duration is 3 seconds (seconds, s).

In an embodiment, the obtaining a first object includes: obtaining a predicted trajectory of the intelligent driving device and a predicted trajectory of each object of a plurality of objects, where the plurality of objects include the first object; determining a TTC between the intelligent driving device and each object based on the predicted trajectory of the intelligent driving device and the predicted trajectory of each object; and determining the first object from the plurality of objects based on the TTC between the intelligent driving device and each object.

In an embodiment, the method further includes: obtaining collision polygons of the intelligent driving device and each object. The determining a TTC between the intelligent driving device and each object based on the predicted trajectory of the intelligent driving device and the predicted trajectory of each object includes: determining the TTC between the intelligent driving device and each object based on the predicted trajectory of the intelligent driving device, the predicted trajectory of each object, and the collision polygons of the intelligent driving device and each object.

For example, predicted trajectories of the intelligent driving device and each object may include trajectory points at a plurality of moments. Through a combination of collision polygons and trajectory points at each moment, information such as locations and postures of the intelligent driving device and each object at each moment may be determined, so that the TTC between the intelligent driving device and each object may be determined.

The collision polygon may be understood as a detection box (bounding box, bbox). For example, the detection box may be a rectangular box or a cube; or the collision polygon may be understood as a polygon (polygon) contour.

In an embodiment, a traveling parameter of each object and information about an environment in which each object is located may be determined by using data collected by a sensor of the intelligent driving device. The intelligent driving device may determine the predicted trajectory of each object based on the traveling parameter of each object and/or the information about the environment in which each object is located (for example, information about a moving object or a static object around each object).

In an embodiment, the predicted trajectory of each object may include one or more predicted trajectories. For example, the intelligent driving device may predict one predicted trajectory of an object based on a current traveling parameter of the object. In addition, the intelligent driving device may further predict another predicted trajectory based on the current traveling parameter of the object and information between the object and a surrounding object of the object.

For example, the traveling parameter of each object includes one or more of the following: a speed, an acceleration, a speed direction, a heading angle direction, and a heading angular velocity of each object.

In an embodiment, the TTC between the first object and the intelligent driving device is less than a TTC between a second object and the intelligent driving device, and the second object is any one of the plurality of objects other than the first object.

In an embodiment, obtaining the predicted trajectory of each object of the plurality of objects includes: obtaining predicted trajectories that are of the plurality of objects and that are sent by a server.

In an embodiment, obtaining the predicted trajectory of the intelligent driving device includes: when the intelligent driving device is in a driver-manual driving state, determining the predicted trajectory of the intelligent driving device based on a driving operation of a driver and/or a current traveling parameter of the intelligent driving device.

For example, the traveling parameter of the intelligent driving device includes one or more of the following: a speed, an acceleration, a speed direction, a heading angle direction, and a heading angular velocity of the intelligent driving device.

For another example, the driving operation of the driver includes at least one of the following: a steering angle of a steering wheel, opening degree information of a brake pedal, and opening degree information of an acceleration pedal. The opening degree information of the brake pedal includes an opening degree and/or an opening degree change rate of the brake pedal, and the opening degree information of the acceleration pedal includes an opening degree and/or an opening degree change rate of the acceleration pedal.

In an embodiment, obtaining the predicted trajectory of the intelligent driving device includes: when the intelligent driving device is in a self-driving state, determining the predicted trajectory of the intelligent driving device based on the data collected by the sensor of the intelligent driving device.

For example, the intelligent driving device may determine the predicted trajectory of the intelligent driving device based on kinematics characteristics of the intelligent driving device and sensed characteristics about an environment such as a road that is collected by using the sensor.

For example, the intelligent driving device is a vehicle. The predicted trajectory of the intelligent driving device may be a planning line, a traction line, a prediction line based on a vehicle kinematics characteristic, or the like in a self-driving process of the intelligent driving device. It should be understood that when the intelligent driving device does not properly execute the planning line, the intelligent driving device travels along the traction line.

In an embodiment, obtaining the predicted trajectory of the intelligent driving device includes: obtaining a predicted trajectory that is of the intelligent driving device and that is sent by the server.

In an embodiment, the obtaining collision polygons of the intelligent driving device and each object includes: determining the collision polygons of the intelligent driving device and each object based on a type of a first instruction and/or a type of each object.

For example, the collision polygons of the intelligent driving device and each object may be determined based on the type of the first instruction. When an ADAS supports a plurality of functions (or instructions), a collision polygon can be customized for each function. For example, table 1 shows a correspondence between an instruction type, a customized collision polygon of the intelligent driving device, and a customized collision polygon of each object.

**Table 1**

| Instruction type | Customized collision polygon of the intelligent driving device | Customized collision polygon of each object |
|---|---|---|
| Autonomous emergency braking AEB | Capture a head area of a collision polygon | Expand a collision polygon by a preset multiple |
| Forward cross traffic braking (forward cross traffic braking, FCTB) | Capture a head area of a collision polygon and extend the head area forward | Expand an area facing the intelligent driving device by a preset multiple |
| Rear cross traffic braking (rear cross traffic braking, RCTB) | Capture a tail area of a collision polygon and extend the tail area backward | Expand an area facing the intelligent driving device by a preset multiple |
| FCW | Capture a head area of a collision polygon | Expand a collision polygon by a preset multiple |
| Forward cross traffic alert (forward cross traffic alert, FCTA) | Capture a head area of a collision polygon and extend the head area forward | Expand an area facing the intelligent driving device by a preset multiple |
| Rear cross traffic alert (rear cross traffic alert, RCTA) | Capture a tail area of a collision polygon and extend the tail area backward | Expand an area facing the intelligent driving device by a preset multiple |
| ... | ... | ... |

The CTB may include the FCTB and the RCTB, and the CTA may include the FCTA and the RCTA.

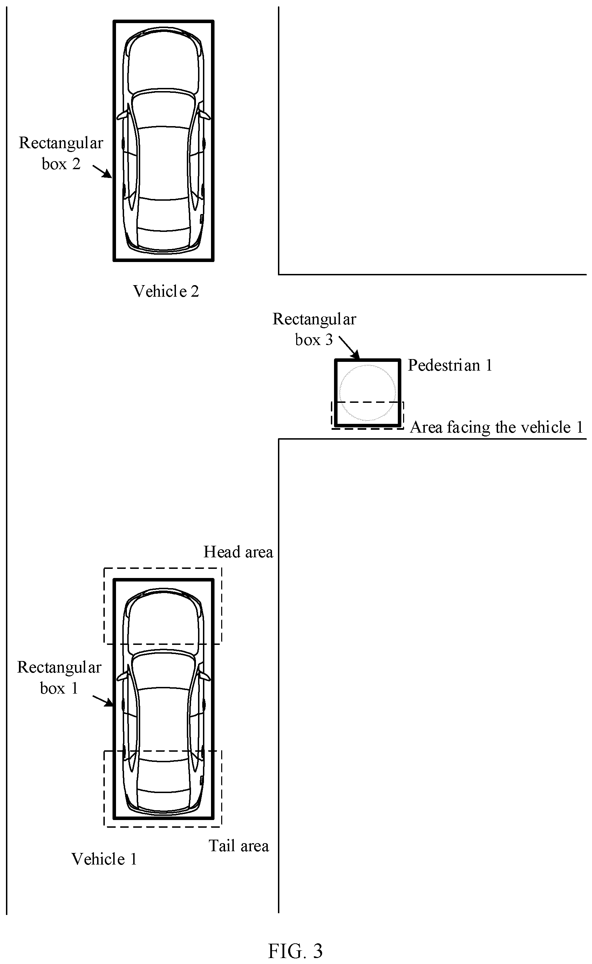

FIG. 3 is a diagram of an application scenario according to an embodiment of this application. As shown in FIG. 3, a vehicle 1 may be the intelligent driving device, and a vehicle 2 and a pedestrian 1 may be two objects of the plurality of objects. A collision polygon of the vehicle 1 may be a rectangular box 1, a collision polygon of the vehicle 2 may be a rectangular box 2, and a collision polygon of the pedestrian 1 is a rectangular box 3. The rectangular box 1 includes a head area and a tail area, and the rectangular box 3 includes an area facing the vehicle 1.

If the vehicle 1 supports an AEB function or an FCW function, the vehicle 1 may process collision polygons of the vehicle 1 and the vehicle 2. For example, the head area of the rectangular box 1 is captured as a customized collision polygon of the vehicle 1, and a rectangular box obtained after the rectangular box 2 is expanded by two times is used as a customized collision polygon of the vehicle 2. The vehicle head area of the collision polygon of the vehicle 1 is captured, to avoid false triggering of a tail scratch alarm of the vehicle 1.

If the vehicle 1 supports an FCTB function or an FCTA function, the vehicle 1 may process collision polygons of the vehicle 1 and the pedestrian 1. For example, the vehicle 1 captures the head area of the rectangular box 1 and extends the head area outward by 1 m; and expands, by two times, the area that is in the rectangular box 3 and that faces the vehicle 1, or extends, outward by 1 m, the area that is in the rectangular box 3 and that faces the vehicle 1.

For another example, the collision polygons of the intelligent driving device and each object may be determined based on a type of the first object. For example, table 2 shows a correspondence between an object type, a customized collision polygon of the intelligent driving device, and a customized collision polygon of each object.

**Table 2**

| Object type | Customized collision polygon of the intelligent driving device | Customized collision polygon of each object |
|---|---|---|
| Pedestrian | Expand a collision polygon by two times | Expand a collision polygon by two times |
| Cycling user | Expand a collision polygon by 1.5 times | Expand a collision polygon by 1.5 times |
| Vehicle | Expand a collision polygon by 1.2 times | Expand a collision polygon by 1.2 times |
| ... | ... | ... |

For example, as shown in FIG. 3, a rectangular box obtained after the rectangular box 2 is expanded by 1.2 times may be used as a customized collision polygon of the vehicle 2, and a rectangular box obtained after the rectangular box 3 is expanded by 2 times may be used as a customized collision polygon of the pedestrian 1.

The correspondences shown in Table 1 and Table 2 are merely examples. This is not specifically limited in this embodiment of this application.

S220: Predict a first predicted trajectory obtained after the intelligent driving device triggers the first instruction, where the first instruction includes a steering instruction, an autonomous braking instruction, or a warning instruction.

For example, the steering instruction may include an ESA instruction.

For example, the autonomous braking instruction may include an AEB instruction or a CTB instruction.

For example, the warning instruction may include an FCW instruction or a CTA instruction.

The predicted trajectory of the intelligent driving device in S210 may be a predicted trajectory obtained before the intelligent driving device obtains the first predicted trajectory through prediction in S220. The predicted trajectory of the intelligent driving device in S210 may be used by the intelligent driving device to select the first object from the plurality of objects. In S220, the first predicted trajectory may be used to determine whether to trigger the first instruction.

In an embodiment, the first predicted trajectory may include a braking trajectory or a lateral trajectory. For example, when the first instruction is the AEB instruction or the FCW instruction, the first predicted trajectory may be the braking trajectory.

For another example, when the first instruction is the ESA instruction, the first predicted trajectory may be the lateral trajectory. Predicting the first predicted trajectory obtained after the intelligent driving device triggers the ESA instruction may also be understood as deriving a lateral trajectory of the intelligent driving device.

The lateral trajectory may also be understood as a lateral avoidance trajectory.

In an embodiment, predicting the first predicted trajectory obtained after the intelligent driving device triggers the first instruction includes: in response to obtaining the first object, predicting the first predicted trajectory.

In this embodiment of this application, when the intelligent driving device discovers the first object, the intelligent driving device may predict the first predicted trajectory obtained after the intelligent driving device triggers the first instruction. This can reduce computing overheads of the intelligent driving device, and help reduce power consumption of the intelligent driving device.

In an embodiment, the intelligent driving device may alternatively start to predict, before obtaining the first object, a predicted trajectory obtained after the intelligent driving device triggers the first instruction.

In an embodiment, predicting the first predicted trajectory obtained after the intelligent driving device triggers the first instruction includes: predicting the first predicted trajectory based on information that is about the intelligent driving device and that includes at least one of the following: braking acceleration information of the intelligent driving device, steering information of the intelligent driving device, the collision polygon of the intelligent driving device, a reaction time of a user to the first instruction, a response time of the intelligent driving device to the first instruction, and a traveling parameter of the intelligent driving device.

For example, the intelligent driving device is the foregoing vehicle 1 and the vehicle 1 supports an AEB function. The vehicle 1 may predict, based on information such as braking acceleration information of the vehicle 1, a response time of the vehicle 1 to the AEB instruction, and a current traveling parameter of the vehicle 1, a braking trajectory obtained after the vehicle 1 triggers the AEB instruction.

For example, the braking acceleration information of the vehicle 1 may include a maximum braking acceleration (for example, 10 m/s²) of the vehicle 1, and a maximum braking acceleration, a braking acceleration (jerk), and the like that are set by the user.

For example, the intelligent driving device is the foregoing vehicle 1 and the vehicle 1 supports an FCW function. The vehicle 1 may predict, based on information such as the braking acceleration information of the vehicle 1, a reaction time of the driver, and a current traveling parameter of the vehicle 1, a braking trajectory obtained after the vehicle 1 triggers the AEB instruction.

For example, the reaction time of the driver may be an average reaction time that is from triggering the FCW function to detecting an operation of stepping on a brake pedal by the driver and that is within a past period of time (for example, one month).

For another example, the braking acceleration information of the vehicle 1 may be determined based on information about a brake pedal opening degree change that is detected after the FCW function is triggered and that is within a past period of time (for example, one month).

In an embodiment, the information about the reaction time of the driver or the brake pedal opening degree change may alternatively be a calibration value (or a fixed value) of the intelligent driving device (for example, a vehicle) upon delivery.

In an embodiment, if the intelligent driving device supports a plurality of instructions of different types, the intelligent driving device may predict a predicted trajectory obtained after an instruction of each type is triggered.

For example, the scenario shown in FIG. 3 is used as an example. If the vehicle 1 supports an FCW function and an AEB function, the vehicle 1 may separately predict a braking trajectory obtained after the FCW function is triggered and a braking trajectory obtained after the AEB function is triggered. For example, when determining that a TTC between the vehicle 1 and the vehicle 2 meets the foregoing preset condition, the vehicle 1 may separately predict a braking trajectory 1 obtained after the FCW function is triggered and a braking trajectory 2 obtained after the AEB function is triggered. In this way, whether to trigger the FCW function is determined based on a predicted trajectory of the vehicle 2 and the braking trajectory 1, and whether to trigger the AEB function is determined based on the predicted trajectory of the vehicle 2 and the braking trajectory 2.

In an embodiment, the obtaining a first object includes: obtaining the first object at a first moment, where the intelligent driving device is at a first location at the first moment, and a distance between a start location of the first predicted trajectory and the first location is a preset safety distance.

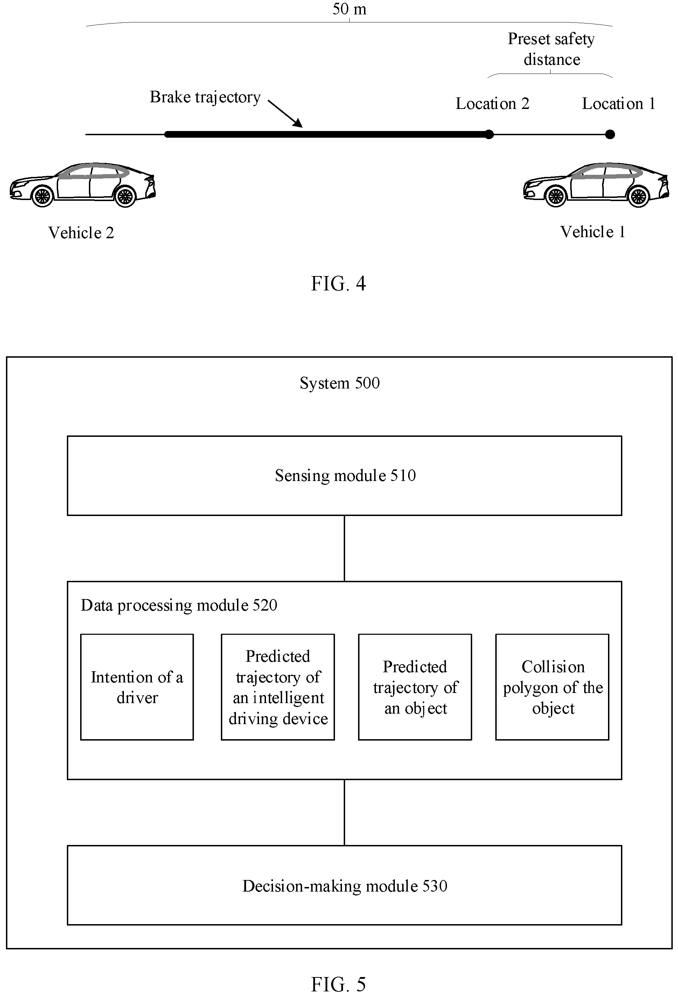

FIG. 4 is a diagram of a braking trajectory of the vehicle 1 according to an embodiment of this application. As shown in FIG. 4, the vehicle 1 determines, at a moment T₁, that the vehicle 2 is an object with a minimum TTC between the vehicle 1 and the plurality of objects. In this case, the vehicle 1 is at a location 1, and a distance between the vehicle 1 and the vehicle 2 is 50 m. The vehicle 1 may predict a braking trajectory obtained after the vehicle 1 triggers the AEB instruction, and a preset safety distance (for example, 10 m) may be reserved between a start location (for example, a location 2) of the braking trajectory and the location 1.

For example, the vehicle 1 may derive a braking trajectory from a location that is 40 meters away from the vehicle 2. In this way, a travel distance in discrete time can be compensated, and impact of a self-vehicle response error on an actual braking trajectory can be reduced. For example, the vehicle 1 may determine, based on a specific period (for example, 1 s), whether to predict the braking trajectory obtained after the vehicle 1 triggers the AEB. At a moment T₃ in a period [T₂, T₂+1], it is determined that the vehicle 2 is an object with a minimum TTC with the vehicle 1. However, a braking trajectory is not derived in the period, and the braking trajectory needs to be derived in a next period. In this case, if the vehicle 1 still travels at a normal speed in [T₃, T₂+1], safety of the vehicle may be affected. The safety distance is reserved, so that accuracy of the braking trajectory predicted by the vehicle 1 can be improved, thereby helping improve safety of the vehicle.

In an embodiment, the method further includes: determining the preset safety distance based on at least one of the following: a type of the first instruction, the traveling parameter of the intelligent driving device, and a calculated frame rate of the intelligent driving device.

For example, table 3 shows a correspondence between the type of the first instruction and the preset safety distance.

**Table 3**

| Type of the first instruction | Preset safety distance |
|---|---|
| AEB | 1 m |
| FCW | 2 m |
| ... | ... |

For example, table 4 shows a correspondence between the speed of the intelligent driving device and the preset safety distance.

**Table 4**

| Speed of the intelligent driving device | Preset safety distance |
|---|---|
| (80 km/h, 100 km/h] | 2 m |
| (60 km/h, 80 km/h] | 1.5 m |
| ... | ... |

In the correspondence between the speed of the intelligent driving device and the preset safety distance, the speed of the intelligent driving device may be a speed at which the intelligent driving device obtains the first object.

For example, table 5 shows a correspondence between the calculated frame rate of the intelligent driving device and the preset safety distance.

**Table 5**

| Calculated frame rate of the intelligent driving device | Preset safety distance |
|---|---|
| 50 fps | 1 m |
| 20 fps | 1.5 m |
| ... | ... |

The calculated frame rate of the intelligent driving device may be a calculated frame rate of the processor in the computing platform 120 shown in FIG. 1. For example, the calculated frame rate may be a calculated frame rate of an artificial intelligence core (artificial intelligence core, AI core).

S230: Determine, based on the first predicted trajectory and a second predicted trajectory of the first object, whether to trigger the first instruction.

For example, the scenario shown in FIG. 3 is used as an example. If at a future moment, a trajectory point 1 on the braking trajectory 1 of the vehicle 1 intersects with a trajectory point 2 on the predicted trajectory of the vehicle 2, it is considered that the moment is a latest warning occasion, and the vehicle 1 may trigger the FCW function; otherwise, the vehicle 1 does not trigger the FCW function.

That the trajectory point 1 intersects with the trajectory point 2 may be understood as that a distance between the trajectory point 1 and the trajectory point 2 is less than or equal to a preset distance; or may be understood as that at a future moment, a collision polygon of the vehicle 1 at the trajectory point 1 partially or completely overlaps a collision polygon of the vehicle 2 at the trajectory point 2.

For another example, if at a future moment, a trajectory point 3 on the braking trajectory 2 of the vehicle 1 intersects with a trajectory point 4 on the predicted trajectory of the vehicle 2, it is considered that the moment is a latest braking occasion, and the vehicle 1 may trigger the AEB function; otherwise, the vehicle 1 does not trigger the AEB function.

In an embodiment, determining, based on the first predicted trajectory and the second predicted trajectory of the first object, whether to trigger the first instruction includes: determining, based on the first predicted trajectory, the second predicted trajectory of the first object, and an intention of the driver, whether to trigger the first instruction.

In an embodiment, the intention of the driver includes at least one of the following: an intention of the driver to rotate the steering wheel, an intention of the driver to step on the brake pedal, and an intention of the driver to step on the acceleration pedal.

For example, the scenario shown in FIG. 3 is used as an example. When the trajectory point 1 intersects with the trajectory point 2, if the vehicle 1 detects that a rotation angle of the steering wheel is greater than or equal to a preset rotation angle, or that a rotation angle change rate of the steering wheel is greater than or equal to a preset rotation angle change rate, it is considered that the driver is aware of a dangerous scenario and reacts to the dangerous scenario by controlling the vehicle to perform steering, and the vehicle 1 may not trigger the FCW instruction.

For another example, the scenario shown in FIG. 3 is used as an example. When the trajectory point 1 intersects with the trajectory point 2, if the vehicle 1 detects that the opening degree of the brake pedal is greater than or equal to a first preset opening degree, it is considered that the driver is aware of a dangerous scenario and reacts to the dangerous scenario by controlling the vehicle to brake, and the vehicle 1 may not trigger the FCW instruction.

For another example, the scenario shown in FIG. 3 is used as an example. When it is determined, by using a braking trajectory obtained after the vehicle 1 triggers the CTB instruction and a predicted trajectory of the pedestrian 1, that there is a risk of collision between the vehicle 1 and the pedestrian 1, and it is detected that the vehicle 1 detects that the opening degree of the acceleration pedal is greater than or equal to a second preset opening degree, it is considered that the driver is aware of a dangerous scenario and reacts to the dangerous scenario by controlling the vehicle to quickly pass through an intersection, and the vehicle 1 may not trigger the CTB instruction.

FIG. 5 is a diagram of a system 500 according to an embodiment of this application. As shown in FIG. 5, the system 500 includes a sensing module 510, a data processing module 520, and a decision-making module 530. The sensing module 510 may include a plurality of sensors. The plurality of sensors may include a camera, a lidar, a millimeter-wave radar, an ultrasonic radar, an acceleration pedal opening degree sensor, a brake pedal opening degree sensor, a steering wheel rotation angle sensor, and the like. The sensing module 210 may send, to the data processing module 520, data collected by the plurality of sensors.

The data processing module 520 may determine, based on the data sent by the sensing module 510, at least one of the following: a traveling parameter of an intelligent driving device, a rotation angle of a steering wheel, opening degree information of a brake pedal, opening degree information of a brake pedal, information about a surrounding road structure of the intelligent driving device, a traveling parameter of a surrounding object of the intelligent driving device, and the like. In addition, the data processing module 520 may further determine an intention of a driver with reference to at least one of the following: the rotation angle of the steering wheel, the opening degree information of the brake pedal, and the opening degree information of the brake pedal, determine a predicted trajectory of the intelligent driving device with reference to the traveling parameter of the intelligent driving device, determine a predicted trajectory of the object with reference to the traveling parameter of the surrounding object of the intelligent driving device, and determine a collision polygon of the object with reference to a size of the object. The data processing module 520 may send the intention of the driver, the predicted trajectory of the intelligent driving device, a collision polygon of the intelligent driving device, the predicted trajectory of the object, and the collision polygon of the object to the decision-making module 530.

The decision-making module 530 may perform object screening with reference to the predicted trajectory of the intelligent driving device, the collision polygon of the intelligent driving device, the predicted trajectory of the object, and the collision polygon of the object, to obtain a first object. The decision-making module 530 may further determine, with reference to a predicted trajectory of the first object and a first predicted trajectory obtained after the intelligent driving device executes a first instruction, whether to trigger the first instruction.

The sensing module 510 may be located in the sensing system 110 in FIG. 1, and the data processing module 520 and the decision-making module 530 may be located in the computing platform 120 in FIG. 1.

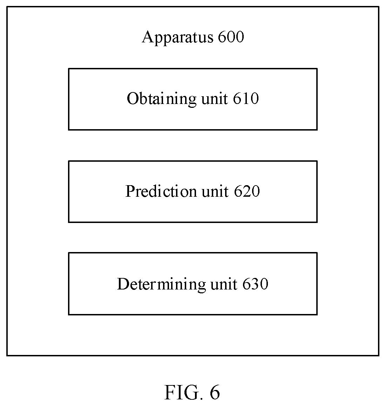

FIG. 6 is a block diagram of an instruction triggering apparatus 600 according to an embodiment of this application. As shown in FIG. 6, the apparatus 600 includes: an obtaining unit 610, configured to obtain a first object, where information between the first object and an intelligent driving device meets a preset condition; a prediction unit 620, configured to predict a first predicted trajectory obtained after the intelligent driving device triggers a first instruction, where the first instruction includes a steering instruction, an autonomous braking instruction, or a warning instruction; and a determining unit 630, configured to determine, based on the first predicted trajectory and a second predicted trajectory of the first object, whether to trigger the first instruction.

Optionally, the prediction unit 620 is configured to: predict the first predicted trajectory based on at least one of the following: braking acceleration information of the intelligent driving device, steering information of the intelligent driving device, a collision polygon of the intelligent driving device, a reaction time of a user to the first instruction, a response time of the intelligent driving device to the first instruction, and a traveling parameter of the intelligent driving device.

Optionally, the obtaining unit 610 is configured to: obtain the first object at a first moment, where the intelligent driving device is at a first location at the first moment, and a distance between a start location of the first predicted trajectory and the first location is a preset safety distance.

Optionally, the obtaining unit 610 is further configured to: obtain a predicted trajectory of the intelligent driving device and a predicted trajectory of each object of a plurality of objects, where the plurality of objects include the first object. The determining unit 630 is further configured to: determine a TTC between the intelligent driving device and each object based on the predicted trajectory of the intelligent driving device and the predicted trajectory of each object; and determine the first object from the plurality of objects based on the TTC between the intelligent driving device and each object.

Optionally, the determining unit 630 is configured to: determine collision polygons of the intelligent driving device and each object based on a type of the first instruction and/or a type of each object; and determine the TTC between the intelligent driving device and each object based on the predicted trajectory of the intelligent driving device, the predicted trajectory of each object, and the collision polygons of the intelligent driving device and each object.

Optionally, the determining unit 630 is configured to: determine, based on the first predicted trajectory, the second predicted trajectory of the first object, and an intention of a driver, whether to trigger the first instruction.

Optionally, the intention of the driver includes at least one of the following: an intention of the driver to rotate a steering wheel, an intention of the driver to step on a brake pedal, and an intention of the driver to step on an acceleration pedal.

Optionally, the steering instruction includes an ESA instruction; and/or the autonomous braking instruction includes an AEB instruction or a CTB instruction; and/or the warning instruction includes an FCW instruction or a CTA instruction.

For example, the obtaining unit 610 may be the computing platform, or the processing circuit, the processor, or a controller in the computing platform in FIG. 1. For example, the obtaining unit 610 is the processor 121 in the computing platform. The processor 121 may obtain data collected by one or more sensors, and determine, based on the data, the first object whose information with the intelligent driving device meets the preset condition.

For another example, a function implemented by the obtaining unit 610 may be implemented by the foregoing decision-making module 530.

For another example, the prediction unit 620 may be the computing platform, or the processing circuit, the processor, or the controller in the computing platform in FIG. 1. For example, the path planning unit 620 is the processor 122 in the computing platform, and the processor 122 may predict the first predicted trajectory obtained after the intelligent driving device triggers the first instruction. Optionally, when the processor 121 obtains the first object, the processor 122 may predict the first predicted trajectory obtained after the intelligent driving device triggers the first instruction.

For another example, a function implemented by the prediction unit 620 may be implemented by the foregoing data processing module 520.

For another example, the determining unit 630 may be the computing platform, or the processing circuit, the processor, or the controller in the computing platform in FIG. 1. For example, the determining unit 630 is the processor 123 in the computing platform. The processor 123 may determine, based on the first predicted trajectory obtained by the processor 122 through prediction and the second predicted trajectory of the first object, whether to trigger the first instruction.

For another example, a function implemented by the determining unit 630 may be implemented by the foregoing decision-making module 530.

The function implemented by the obtaining unit 610 and functions implemented by the prediction unit 620 and the determining unit 630 may be respectively implemented by different processors, or may be implemented by a same processor; or a part of the function implemented by the obtaining unit 610 and functions implemented by the prediction unit 620 and the determining unit 630 are implemented by a same processor. This is not limited in this embodiment of this application.

It should be understood that division of units in the apparatus is merely logical function division. In an actual implementation, all or some of the units may be integrated into one physical entity or may be physically separated. In addition, the unit in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or functions of units in the apparatus. The processor is, for example, a general-purpose processor such as a CPU or a microprocessor, and the memory is a memory inside the apparatus or a memory outside the apparatus. Alternatively, the unit in the apparatus may be implemented in a form of hardware circuit, and functions of some or all of the units may be implemented through a design of the hardware circuit. The hardware circuit may be understood as one or more processors. For example, in an implementation, the hardware circuit is an ASIC, and the functions of some or all of the units are implemented through a design of a logical relationship between elements in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement the functions of some or all of the foregoing units. All of the units of the foregoing apparatus may be implemented in a form of software invoked by a processor, or may be implemented in a form of hardware circuit, or some of the units are implemented in a form of software invoked by a processor, and the remaining units are implemented in a form of hardware circuit.

Each unit in the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units are integrated together and implemented in a form of SoC. The SoC may include at least one processor, configured to implement any one of the foregoing methods or implement functions of the units of the apparatus. Types of the at least one processor may be different, for example, the at least one processor includes a CPU and an FPGA, a CPU and an artificial intelligence processor, a CPU and a GPU, and the like.

An embodiment of this application further provides an apparatus. The apparatus includes a processing unit and a storage unit. The storage unit is configured to store instructions, and the processing unit executes the instructions stored in the storage unit, so that the apparatus performs the methods or steps performed in the foregoing embodiments.

Optionally, if the apparatus is located in an intelligent driving device, the processing unit may be the processors 121 to 12n shown in FIG. 1.

An embodiment of this application further provides an intelligent driving device. The intelligent driving device may include the foregoing apparatus 600.

Optionally, the intelligent driving device may be a vehicle.

An embodiment of this application further provides a server. The server may include the foregoing apparatus 600.

An embodiment of this application further provides a computer program product. The computer program product includes computer program code. When the computer program code is run on a computer, the computer is enabled to perform the instruction triggering method in the foregoing embodiments.

An embodiment of this application further provides a computer-readable medium. The computer-readable medium stores program code. When the computer program code is run on a computer, the computer is enabled to perform the instruction triggering method in the foregoing embodiments.

An embodiment of this application further provides a chip, including a circuit, configured to perform the instruction triggering method in the foregoing embodiments.

In an implementation process, steps in the foregoing methods may be implemented by using a hardware integrated logical circuit in a processor, or by using instructions in a form of software. The method disclosed with reference to embodiments of this application may be directly performed and completed by a hardware processor, or performed and completed by a combination of hardware and software modules in a processor. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be further understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division of the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or another form.

The units described as separate parts may or may not be physically separate, and parts displayed as units may or may not be physical units, to be specific, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or a part contributing to a conventional technology, or some of the technical solutions may be implemented in a form of software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall be covered.

## Claims

1. An instruction triggering method, comprising:
obtaining a first object, wherein information between the first object and an intelligent driving device meets a preset condition;
predicting a first predicted trajectory obtained after the intelligent driving device triggers a first instruction, wherein the first instruction comprises a steering instruction, an autonomous braking instruction, or a warning instruction; and
determining, based on the first predicted trajectory and a second predicted trajectory of the first object, whether to trigger the first instruction.

2. The method according to claim 1, wherein the predicting a first predicted trajectory obtained after the intelligent driving device triggers a first instruction comprises:
predicting the first predicted trajectory based on at least one of the following: braking acceleration information of the intelligent driving device, steering information of the intelligent driving device, a collision polygon of the intelligent driving device, a reaction time of a user to the first instruction, a response time of the intelligent driving device to the first instruction, and a traveling parameter of the intelligent driving device.

3. The method according to claim 1 or 2, wherein the obtaining a first object comprises:
obtaining the first object at a first moment, wherein
the intelligent driving device is at a first location at the first moment, and a distance between a start location of the first predicted trajectory and the first location is a preset safety distance.

4. The method according to any one of claims 1 to 3, wherein the obtaining a first object comprises:
obtaining a predicted trajectory of the intelligent driving device and a predicted trajectory of each object of a plurality of objects, wherein the plurality of objects comprise the first object;
determining a time to collision TTC between the intelligent driving device and each object based on the predicted trajectory of the intelligent driving device and the predicted trajectory of each object; and
determining the first object from the plurality of objects based on the TTC between the intelligent driving device and each object.

5. The method according to claim 4, wherein the method further comprises:
determining collision polygons of the intelligent driving device and each object based on a type of the first instruction and/or a type of each object; and
the determining a TTC between the intelligent driving device and each object based on the predicted trajectory of the intelligent driving device and the predicted trajectory of each object comprises:
determining the TTC between the intelligent driving device and each object based on the predicted trajectory of the intelligent driving device, the predicted trajectory of each object, and the collision polygons of the intelligent driving device and each object.

6. The method according to any one of claims 1 to 5, wherein the determining, based on the first predicted trajectory and a second predicted trajectory of the first object, whether to trigger the first instruction comprises:
determining, based on the first predicted trajectory, the second predicted trajectory of the first object, and an intention of a driver, whether to trigger the first instruction.

7. The method according to claim 6, wherein the intention of the driver comprises at least one of the following: an intention of the driver to rotate a steering wheel, an intention of the driver to step on a brake pedal, and an intention of the driver to step on an acceleration pedal.

8. The method according to any one of claims 1 to 7, wherein the steering instruction comprises an evasive steering assist ESA instruction; and/or
the autonomous braking instruction comprises an autonomous emergency braking AEB instruction or a cross traffic braking CTB instruction; and/or
the warning instruction comprises a forward collision warning FCW instruction or a cross traffic alert CTA instruction.

9. An instruction triggering apparatus, comprising:
an obtaining unit, configured to obtain a first object, wherein information between the first object and an intelligent driving device meets a preset condition;
a prediction unit, configured to predict a first predicted trajectory obtained after the intelligent driving device triggers a first instruction, wherein the first instruction comprises a steering instruction, an autonomous braking instruction, or a warning instruction; and
a determining unit, configured to determine, based on the first predicted trajectory and a second predicted trajectory of the first object, whether to trigger the first instruction.

10. The apparatus according to claim 9, wherein the prediction unit is configured to:
predict the first predicted trajectory based on at least one of the following: braking acceleration information of the intelligent driving device, steering information of the intelligent driving device, a collision polygon of the intelligent driving device, a reaction time of a user to the first instruction, a response time of the intelligent driving device to the first instruction, and a traveling parameter of the intelligent driving device.

11. The apparatus according to claim 9 or 10, wherein the obtaining unit is configured to:
obtain the first object at a first moment, wherein
the intelligent driving device is at a first location at the first moment, and a distance between a start location of the first predicted trajectory and the first location is a preset safety distance.

12. The apparatus according to any one of claims 9 to 11, wherein the obtaining unit is further configured to:
obtain a predicted trajectory of the intelligent driving device and a predicted trajectory of each object of a plurality of objects, wherein the plurality of objects comprise the first object; and
the determining unit is further configured to:
determine a TTC between the intelligent driving device and each object based on the predicted trajectory of the intelligent driving device and the predicted trajectory of each object; and
determine the first object from the plurality of objects based on the TTC between the intelligent driving device and each object.

13. The apparatus according to claim 12, wherein the determining unit is configured to:
determine collision polygons of the intelligent driving device and each object based on a type of the first instruction and/or a type of each object; and
determine the TTC between the intelligent driving device and each object based on the predicted trajectory of the intelligent driving device, the predicted trajectory of each object, and the collision polygons of the intelligent driving device and each object.

14. The apparatus according to any one of claims 9 to 13, wherein the determining unit is configured to:
determine, based on the first predicted trajectory, the second predicted trajectory of the first object, and an intention of a driver, whether to trigger the first instruction.

15. The apparatus according to claim 14, wherein the intention of the driver comprises at least one of the following: an intention of the driver to rotate a steering wheel, an intention of the driver to step on a brake pedal, and an intention of the driver to step on an acceleration pedal.

16. The apparatus according to any one of claims 9 to 15, wherein the steering instruction comprises an ESA instruction; and/or
the autonomous braking instruction comprises an AEB instruction or a CTB instruction; and/or
the warning instruction comprises an FCW instruction or a CTA instruction.

17. An instruction triggering apparatus, comprising:
a memory, configured to store a computer program; and
a processor, configured to execute the computer program stored in the memory, to enable the apparatus to perform the method according to any one of claims 1 to 8.

18. An intelligent driving device, comprising the apparatus according to any one of claims 9 to 17.

19. The intelligent driving device according to claim 18, wherein the intelligent driving device is a vehicle.

20. A computer-readable storage medium, wherein the computer-readable storage medium stores a computer program, and when the computer program is executed by a computer, the method according to any one of claims 1 to 8 is implemented.

21. A chip, comprising a circuit, wherein the circuit is configured to perform the method according to any one of claims 1 to 8.
